# EUROPEAN PATENT SPECIFICATION

(11) **EP 2 892 263 B1**
(45) Date of publication and mention of the grant of the patent: **30.05.2018**
(21) Application number: 13833966.8
(22) Date of filing: 19.08.2013
(51) Int. Cl.: H04W 8/26, H04W 72/04, H04W 16/32

(54) **RADIO BASE STATION AND MOBILE STATION**
DRAHTLOSE BASISSTATION UND MOBILSTATION
STATION DE BASE SANS FIL ET STATION MOBILE

(30) Priority: 29.08.2012 JP 2012188683
(43) Date of publication of application: 08.07.2015
(73) Proprietor: NTT DOCOMO, INC., Chiyoda-ku Tokyo 100-6150 (JP)
(72) Inventor: UCHINO, Tooru, Tokyo 100-6150 (JP); ABETA, Sadayuki, Tokyo 100-6150 (JP); ISHII, Hiroyuki, Palo Alto California, 94304 (US)
(74) Representative: Hoffmann Eitle
(86) International application number: PCT/JP2013/072051
(87) International publication number: WO 2014/034454

(56) References cited:
- WO-A1-2008/084807
- WO-A1-2012/044211
- JP-A- 2011 041 160
- JP-A- 2012 080 416
- JP-A- 2012 080 416
- US-A1- 2012 176 983
- "Requirements, Candidate Solutions & Technology Roadmap for LTE Rel-12 Onward", 3GPP DRAFT; RWS-120010 3GPP WS DOCOMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Ljubljana, Slovenia; 20120611 - 20120612 1 June 2012 (2012-06-01), XP050655098, Retrieved from the Internet: URL:http://www.3gpp.org/ftp/workshop/2012- 06-11_12_RAN_REL12/Docs/ [retrieved on 2012-06-01]
- "Views on Rel-12", 3GPP DRAFT; RWS-120003 VIEWS ON REL-12, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 June 2012 (2012-06-01), XP050655093, Retrieved from the Internet: URL:http://www.3gpp.org/ftp/workshop/2012- 06-11_12_RAN_REL12/Docs/ [retrieved on 2012-06-01]
- NTT DOCOMO, INC.: 'Requirements, Candidate Solutions & Technology Roadmap for LTE Rel-12 Onward' 3GPP WORKSHOP ON RELEASE 12 AND ONWARDS RWS-120010 01 June 2012, XP050655098 Retrieved from the Internet: <URL:http://www.3gpp.org/ftp/workshop/2012- 06-11_12_RAN_REL12/Docs/RWS-120010.zip>
- ERICSSON: 'Views on Rel-12' 3GPP RAN WS ON REL-12 AND ONWARDS RWS-120003 01 June 2012, XP050655093 Retrieved from the Internet: <URL:http://www.3gpp.org/ftp/workshop/2012- 06-11_12_RAN_REL12/Docs/RWS-120003.zip>

## Description

### TECHNICAL FIELD

The present invention relates to a radio base station and a mobile station.

### BACKGROUND ART

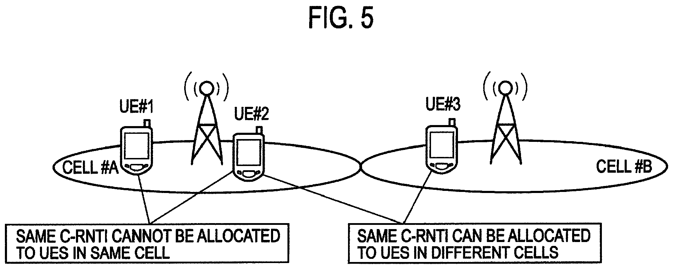

In LTE (Long Term Evolution), as illustrated in Fig. 5, a radio base station eNB is configured to allocate a C-RNTI (Cell-Radio Network Temporary Identify) to a mobile station and to transmit/receive data to and from the mobile station UE performing communications in a cell under the control thereof (see, non-patent document 1).

The C-RNTI is allocated on a cell-by-cell basis. In LTE, as illustrated in Fig. 5, a same C-RNTI cannot be allocated to a mobile station UE#1 and a mobile station UE#2 which perform communications in a same cell #A, and a same C-RNTI can be allocated to a mobile station UE#1 (or a mobile station UE#2) and a mobile station UE#3 which perform communications in different cells #A/#B.

Here, the C-RNTI is allocated in "Contention based RA (Random Access) Procedure" or a handover procedure.

In addition, the radio base station eNB is configured to assign resources for transmitting downlink data or uplink data by using the C-RNTI allocated to the mobile station UE.

Meanwhile, in the "Rel-12 workshop" of the 3GPP, many proposals on "Small cell enhancement" have been made as topics of FRA (Future Radio Access).

In such proposals, a concept of "Phantom cell" has been discussed.

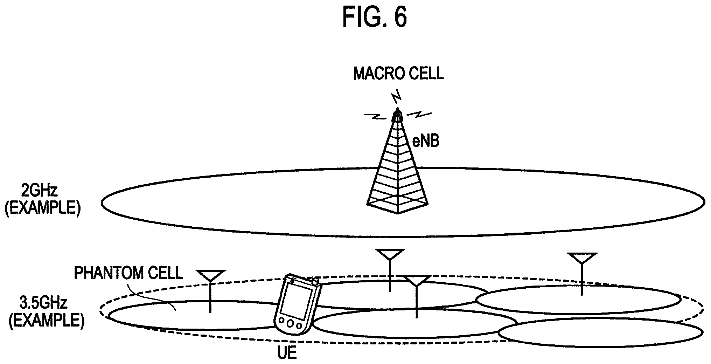

As illustrated in Fig. 6, unlike a conventional macro cell, a phantom cell can cover a wider area by linking many "small cells" to form one large cell.

### PRIOR ART DOCUMENT

### NON-PATENT DOCUMENT

Non-patent document 1: 3GPP TS36.300

JP 2012 080416 A discloses a base station including a control signal generating section that generates a control signal which includes resource information identified by a group identifier assigned to a plurality of radio terminals, and a transmitter section that transmits the control signal generated by the control signal generating section.

US 2012/0176983 A1 discloses a mobile communication system including a step A in which a mobile station UE transmits an uplink data signal using a shared uplink resource designated by an uplink scheduling grant to a radio base station eNB upon reception of the uplink scheduling grant including CB-RNTI; a step B in which the radio base station eNB transmits a downlink control signal including the CB-RNTI upon successful reception of the uplink data signal transmitted by the mobile station UE; and a step C in which the radio base station eNB transmits MAC-CE including C-RNTI of the mobile station UE using a downlink resource designated by the downlink control signal.

### SUMMARY OF THE INVENTION

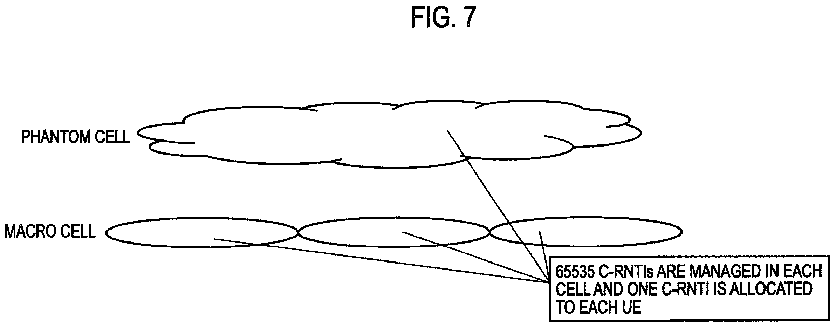

However, as illustrated in Fig. 7, 65535 C-RNTIs are managed in each cell (a macro cell and a phantom cell), and one C-RNTI has to be allocated to each mobile station UE.

Here, when the coverage area of the phantom cell becomes wider, the number of mobile stations UE performing communications in the phantom cell increases. Accordingly, envisaged is a problem of causing a case in which the phantom cell may run out of C-RNTIs allocatable to the mobile stations
UE.

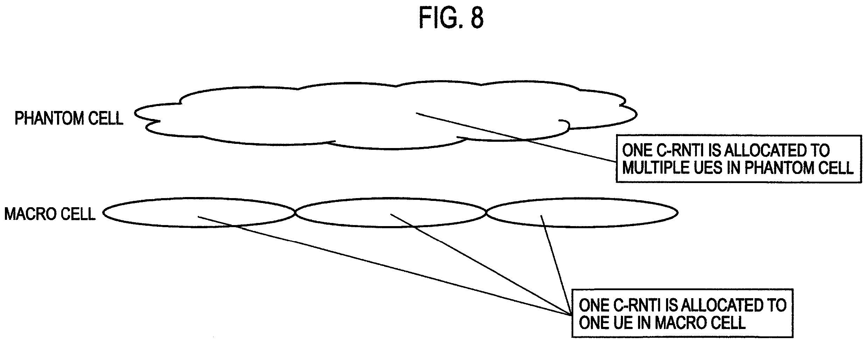

In a conceivable operation for solving the above-described problem, as illustrated in Fig. 8, one C-RNTI is allocated to each mobile station UE in a macro cell, while one C-RNTI is allocated to multiple (a plurality of) mobile stations UE in a phantom cell (in other words, one C-RNTI is shared between the multiple mobile stations UE).

However, execution of the above-described operation entails a problem that mobile stations UE to which the same C-RNTI is allocated in the same cell may collide with each other. Here, when such a collision occurs, a mobile station UE which is not intended by the radio base station eNB may wrongly receive allocation information for a correct mobile station UE.

For this reason, the present invention is made in view of the above-described problem. Accordingly, an objective of the present invention is to provide a radio base station and a mobile station capable of, even when a same C-RNTI is allocated to multiple mobile stations in a phantom cell, avoiding a collision between the mobile stations to which the same C-RNTI is allocated.

The present invention provides a radio base station as set out in claim 1, and a mobile station as set out in in claim 2.

The embodiments and/or examples of the following description which are not covered by the appended set of claims are considered as not being part of the present invention.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a diagram illustrating an operation of the radio base station and a mobile station according to the first embodiment of the present invention.
[Fig. 4] Fig. 4 is a functional block diagram of the mobile station according to the first embodiment of the present invention.
[Fig. 5] Fig. 5 is a diagram for illustrating a conventional technology.
[Fig. 6] Fig. 6 is a diagram for illustrating the conventional technology.
[Fig. 7] Fig. 7 is a diagram for illustrating the conventional technology.
[Fig. 8] Fig. 8 is a diagram for illustrating the conventional technology.

### MODE FOR CARRYING OUT THE INVENTION

### (Mobile communication system according to the first embodiment of the present invention)

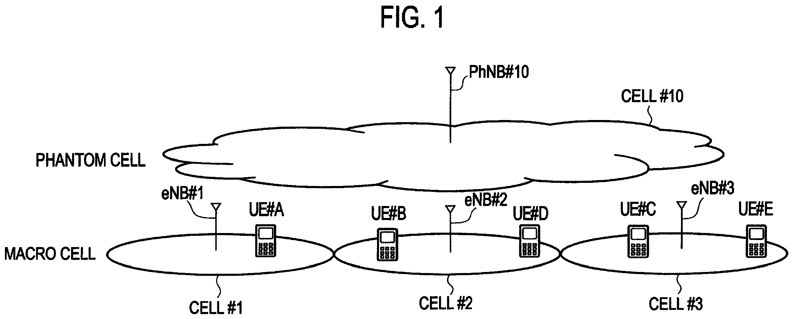

Described by referring to Figs. 1 to 4 is a mobile communication system according to a first embodiment of the present invention.

As illustrated in Fig. 1, a mobile communication system according to the present embodiment is an LTE mobile communication system, which includes a radio base station PhNB#10 configured to manage a cell #10, a radio base station eNB#1 configured to manage a cell #1, a radio base station eNB#2 configured to manage a cell #2, and a radio base station eNB#3 configured to manage a cell #3.

Here, the cell #10 is a phantom cell formed by linking multiple small cells and the cells #1 to #3 are macro cells.

As illustrated in Fig. 1, a coverage area of the cell #10 and coverage areas of the cells #1 to #3 are deployed to at least partially overlap each other.

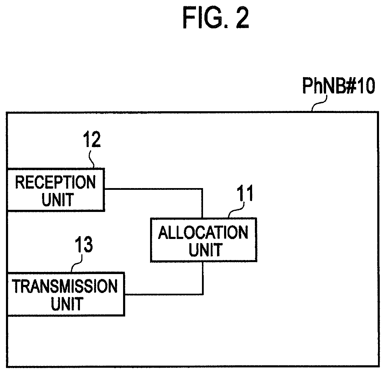

As illustrated in Fig. 2, the radio base station PhNB#10 according to the present embodiment includes an allocation unit 11, a reception unit 12, and a transmission unit 13.

The allocation unit 11 is configured to allocate a same C-RNTIₚₕ to mobile stations UE#A to UE#E in the cell #10.

Here, the allocation unit 11 may allocate a same C-RNTIₚₕ to a predetermined number of mobile stations UE#A to UE#E in the cell #10.

The reception unit 12 is configured to receive various kinds of signals from the mobile stations UE#A to UE#E in the cell #10. The transmission unit 13 is configured to transmit various kinds of signals to the mobile stations UE#A to UE#E in the cell #10.

Here, the transmission unit 13 is configured in advance to notify the mobile stations UE#A to UE#E in the cell #10 of locations of radio resources assigned as PDCCH (Physical Downlink Control Channel) resources.

In addition, the transmission unit 13 may notify the mobile stations UE#A to UE#E in the cell #10 of locations of radio resources assigned as PDSCH (Physical Downlink Shared Channel) resources, PUSCH (Physical Uplink Shared Channel) resources, PUCCH (Physical Uplink Control Channel) resources, ePDCCH resources or the like in advance.

Specifically, the transmission unit 13 notifies multiple mobile stations UE#A to UE#E to which the same C-RNTIₚₕ is allocated of different locations of radio resources.

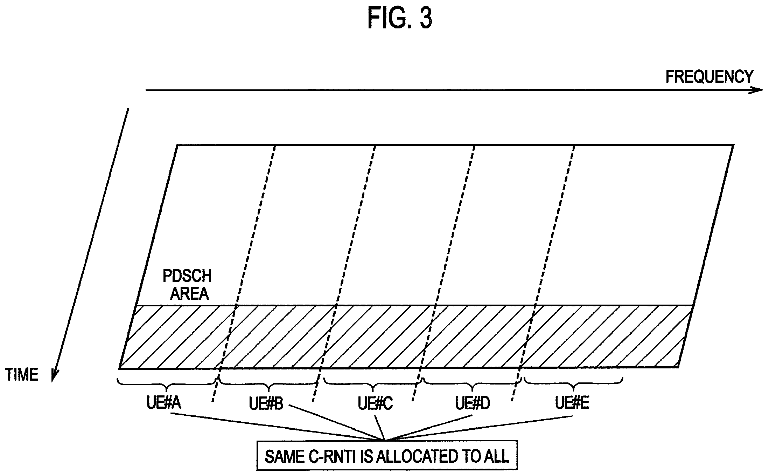

For example, as illustrated in Fig. 3, the transmission unit 13 notifies the multiple mobile stations UE#A to UE#E to which the same C-RNTIₚₕ is allocated of different locations of frequency resources.

Practically, the locations of the radio resources are not as illustrated in Fig. 3 due to interleave. Fig. 3 illustrates groups of CCEs (Control Channel Elements) before interleave.

Then, the transmission unit 13 transmits control signals (for example, scheduling information) to the multiple mobile stations UE#A to UE#E at the notified locations of the radio resources through PDCCH using the same C-RNTIₚₕ (=A).

The reception unit 12 receives a signal transmitted from each of the multiple mobile stations UE#A to UE#E to which the same C-RNTI is allocated through the PUSCH or PUCCH.

Here, the reception unit 12 may receive the signals transmitted from the multiple mobile stations UE#A to UE#E to which the same C-RNTIₚₕ is allocated at different locations of radio resources through the PUSCH or PUCCH.

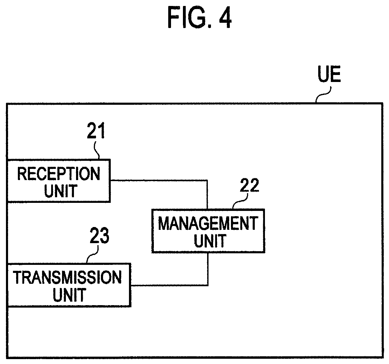

As illustrated in Fig. 4, the mobile station UE according to the present embodiment includes a reception unit 21, a management unit 22, and a transmission unit 23.

The reception unit 21 is configured to receive various kinds of signals from radio base stations PhNB#10/eNB#1/eNB#2/eNB#3.

For example, the reception unit 21 receives information indicating the location of the radio resource and the C-RNTIₚₕ allocated to the mobile station UE from the radio base station PhNB#10 through a dedicated signal.

Here, the reception unit 21 may receive information indicating a location in a frequency direction as information indicating the location of the radio resource.

Also, the reception unit 21 may receive a control signal (for example, scheduling information) from the radio base station PhNB#10 through PDCCH using the C-RNTIₚₕ in the above-described location of the radio resource.

Instead, the reception unit 21 may receive a data signal from the radio base station PhNB#10 through the PDSCH using the C-RNTIₚₕ in the above-described location of the radio resource.

The management unit 22 is configured to manage the information indicating the location of the radio resource received by the reception unit 21 or the C-RNTIₚₕ.

The transmission unit 23 is configured to transmit various kinds of signals to the radio base stations PhNB#10/eNB#1/eNB#2/eNB#3.

For example, the transmission unit 23 transmits a data signal to the radio base station PhNB#10 through the PUSCH based on the scheduling information received by the reception unit 21.

Here, the transmission unit 23 may transmit a data signal to the radio base station PhNB#10 through the PUSCH in the location of the radio resource designated by the above-described scheduling information or may transmit a data signal to the radio base station PhNB#10 through the PUSCH in the above-described location of the radio resource.

In addition, the transmission unit 23 may transmit a signal to the radio base station PhNB#10 through the PUCCH in the above-described location of the radio resource or may transmit SRS (Sounding Reference Signal) or the like.

The features of the present embodiment may also be expressed as follows.

A first feature of the present embodiment is summarized as a radio base station PhNB#10 configured to manage a cell #10 (phantom cell) formed by linking multiple small cells, including: an allocation unit 11 configured to allocate a same C-RNTIₚₕ (cell identifier) to multiple mobile stations UE#A to UE#E in the cell #10; and a transmission unit 13 configured to notify the multiple mobile stations UE#A to UE#E of different locations of radio resources. Here, the transmission unit 13 transmits control signals (for example, scheduling information) to the multiple mobile stations UE#A to UE#E at the notified locations of radio resources through a PDCCH (physical downlink control channel) using the same C-RNTIₚₕ.

With the above-described configuration, even when the same C-RNTIₚₕ is allocated to the multiple mobile stations UE#A to UE#E in the phantom cell, a collision between the mobile stations UE#A to UE#E can be avoided by making the locations of the radio resources used by the mobile stations UE#A to UE#E varied among the mobile stations UE#A to UE#E.

In the first feature of the present embodiment, the transmission unit 13 may notify locations in a frequency direction as the locations of radio resources.

With the above-described configuration, a collision between the mobile stations UE#A to UE#E can be easily avoided by making the locations of frequency resources used by the multiple mobile stations UE#A to UE#E varied among the mobile stations UE#A to UE#E.

In the first feature of the present embodiment, the transmission unit 13 may notify locations in a time direction as the locations of radio resources.

With the above-described configuration, a collision between the mobile stations UE#A to UE#E can be easily avoided by making the locations of time resources used by the multiple mobile stations UE#A to UE#E varied among the mobile stations UE#A to UE#E.

A second feature of the present embodiment is summarized as a mobile station UE capable of communicating with a radio base station PhNB#10 configured to manage a cell #10 formed by linking multiple small cells, the mobile station including: a reception unit 21 configured to receive information indicating a location of radio resource and a C-RNTIₚₕ allocated to the mobile station UE from the radio base station PhNB#10. Here, the reception unit 21 may receive a control signal from the radio base station PhNB#10 at the location of radio resource through a PDCCH using the C-RNTIₚₕ.

With the above-described configuration, the mobile station UE can avoid a collision with another mobile station UE by using the radio resource notified by the radio base station PhNB#10.

In the second feature of the present embodiment, the reception unit 21 may receive information indicating a location in a frequency direction as the information indicating the location of radio resource.

With the above-described configuration, the mobile station UE can easily avoid a collision with another mobile station UE by using the frequency resource notified by the radio base station PhNB#10.

In the second feature of the present embodiment, the reception unit 21 may receive information indicating a location in a time direction as information indicating the location of radio resource.

With the above-described configuration, the mobile station UE can easily avoid a collision with another mobile station UE by using a time resource notified by the radio base station PhNB#10.

In this case, the time resource may be expressed by a minimum unit (TTI) to be allocated or may be expressed by an OFDM symbol unit, or may be expressed by a radio frame unit.

In addition, the location of the above-described radio resource may be notified in any layer such as a RRC layer, PDCP layer, RLC layer, MAC layer or physical layer.

Moreover, the information indicating the location of the radio resource may be notified in a message in which a C-RNTIₚₕ is allocated to a target mobile station UE or may be notified in a message different from the above massage.

Also, the information indicating the location of the radio resource may be allocated through a macro cell or may be allocated through another phantom cell.

Besides, in a communication method using using spread codes, for example, in place of physical division of resources, the spread codes may be notified.

Here, the foregoing operations of the mobile stations UE#A to UE#E and the radio base stations eNB#1/eNB#2/eNB#3/PhNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE#A to UE#E and the radio base stations eNB#1/eNB#2/eNB#3/PhNB#10. Otherwise, the storage medium and the processor may be provided as discrete components inside the mobile stations UE#A to UE#E and the radio base stations eNB#1/eNB#2/eNB#3/PhNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of claims. Therefore, the description of the specification is intended for illustrative explanation only and does not impose any limited interpretation on the present invention.

### INDUSTRIAL APPLICABILITY

As described above, the present invention can provide a radio base station and mobile station that can avoid a collision between mobile stations to which a same C-RNTI is allocated even when the same C-RNTI is allocated to the multiple mobile stations in a phantom cell.

### EXPLANATION OF REFERENCE NUMERALS

eNB#1, eNB#2, eNB#3, PhNB#10 radio base station
11 allocation unit
12, 21 reception unit
13, 23 transmission unit
22 management unit

## Claims

1. A radio base station (PhNB#10) configured to manage a cell (#10) formed by linking a plurality of small cells (#1, #2, #3), comprising:
an allocation unit (11) configured to allocate a same cell-radio network temporary identifier, C-RNTI, to a plurality of mobile stations (UE#A, UE#B, UE#C) in the cell (#10); and
a transmission unit (13) configured to notify the plurality of mobile stations (UE#A, UE#B, UE#C) of different locations of radio resources in a frequency direction or in a time direction, wherein
the transmission unit (13) transmits control signals to the plurality of mobile stations (UE#A, UE#B, UE#C) at the notified locations of radio resources through a physical downlink control channel using the same cell-radio network temporary identifier, C-RNTI.

2. A mobile station (UE) capable of communicating with a radio base station (PhNB#10) configured to manage a cell (#10) formed by linking a plurality of small cells (#1, #2, #3), the mobile station (UE) comprising:
a reception unit (21) configured to receive information indicating a location of radio resource in a frequency direction or in a time direction and a cell-radio network temporary identifier, C-RNTI, allocated to the mobile station (UE) from the radio base station (PhNB#10), wherein
the reception unit (21) receives a control signal from the radio base station (PhNB#10) at the location of radio resource through a physical downlink control channel using the cell-radio network temporary identifier, C-RNTI.

## Patentansprüche

1. Funkbasisstation (PhNB#10), die dazu konfiguriert ist, eine durch Verknüpfen einer Vielzahl von kleinen Zellen (#1, #2, #3) gebildete Zelle (#10) zu verwalten, umfassend:
eine Zuweisungseinheit (11), die dazu konfiguriert ist, einer Vielzahl von Mobilstationen (UE#A, UE#B, UE#C) in der Zelle (#10) ein und denselben Cell-Radio Network Temporary Identifier, C-RNTI, zuzuweisen; und
eine Übertragungseinheit (13), die dazu konfiguriert ist, der Vielzahl von Mobilstationen (UE#A, UE#B, UE#C) verschiedene Standorte von Funkressourcen in einer Frequenzrichtung oder in einer Zeitrichtung mitzuteilen, wobei
die Übertragungseinheit (13) Steuersignale an die Vielzahl von Mobilstationen (UE#A, UE#B, UE#C) an den mitgeteilten Funkressourcen-Standorten über einen physikalischen Downlink-Steuerkanal unter Verwendung ein und desselben Cell-Radio Network Temporary Identifier, C-RNTI, überträgt.

2. Mobilstation (UE), die in der Lage ist, mit einer Funkbasisstation (PhNB#10) zu kommunizieren, welche dazu konfiguriert ist, eine durch Verknüpfen einer Vielzahl von kleinen Zellen (#1, #2, #3) gebildete Zelle (#10) zu verwalten, wobei die Mobilstation (UE) umfasst:
eine Empfangseinheit (21), die dazu konfiguriert ist, Informationen, welche einen Standort von Funkressourcen in einer Frequenzrichtung oder in einer Zeitrichtung anzeigen, und einen Cell-Radio Network Temporary Identifier, C-RNTI, zu empfangen, der der Mobilstation (UE) von der Funkbasisstation (PhNB#10) zugewiesen wurde, wobei
die Empfangseinheit (21) ein Steuersignal von der Funkbasisstation (PhNB#10) am Funkressourcen-Standort über einen physikalischen Downlink-Steuerkanal unter Verwendung des Cell-Radio Network Temporary Identifier, C-RNTI, empfängt.

## Revendications

1. Station de base radio (PhNB#10) configurée pour gérer une cellule (#10) formée en liant une pluralité de petites cellules (#1, #2, #3), comprenant :
une unité d'attribution (11) configurée pour attribuer un même identifiant temporaire de réseau radio cellulaire C-RNTI à une pluralité de stations mobiles (UE#A, UE#B, UE#C) dans la cellule (#10) ; et
une unité de transmission (13) configurée pour notifier la pluralité de stations mobiles (UE#A, UE#B, UE#C) de différents emplacements de ressources radio dans une direction de fréquence ou dans une direction temporelle, dans laquelle
l'unité de transmission (13) transmet des signaux de commande à la pluralité de stations mobiles (UE#A, UE#B, UE#C) aux emplacements notifiés de ressources radio à travers un canal de commande de liaison descendante physique en utilisant le même identifiant temporaire de réseau radio cellulaire C-RNTI.

2. Station mobile (UE) apte à communiquer avec la station de base radio (PhNB#10) configurée pour gérer une cellule (#10) formée en liant une pluralité de petites cellules (#1, #2, #3), la station mobile (UE) comprenant :
une unité de réception (21) configurée pour recevoir des informations indiquant un emplacement de ressource radio dans une direction de fréquence ou dans une direction temporelle et un identifiant temporaire de réseau radio cellulaire C-RNTI attribué à la station mobile (UE) de la station de base radio (PhNB#10), dans laquelle
l'unité de réception (21) reçoit un signal de commande de la station de base radio (PhNB#10) à l'emplacement de ressource radio à travers un canal de commande de liaison descendante physique en utilisant l'identifiant temporaire de réseau radio cellulaire C-RNTI.
